(19) Europäisches Patentamt

European Patent Office

Office européen des brevets

(11) **EP 1 373 933 B1**

(12) **FASCICULE DE BREVET EUROPEEN**

(45) Date de publication et mention
de la délivrance du brevet:
**21.06.2006 Bulletin 2006/25**

(51) Int Cl.:
*G01V 1/04* (2006.01)   *G01V 1/20* (2006.01)
*G10K 9/12* (2006.01)

(21) Numéro de dépôt: 02724390.6

(22) Date de dépôt: **29.03.2002**

(86) Numéro de dépôt international:
**PCT/FR2002/001108**

(87) Numéro de publication internationale:
**WO 2002/079806 (10.10.2002 Gazette 2002/41)**

(54) **SYSTEME DE DETECTION SOUS-MARINE BASSE FREQUENCE REMORQUE**

GESCHLEPPTES NIEDERFREQUENZ-UNTERWASSERDETEKTIONSSYSTEM

TOWED LOW-FREQUENCY UNDERWATER DETECTION SYSTEM

(84) Etats contractants désignés:
**DE GB IT**

(30) Priorité: **30.03.2001 FR 0104378**
**24.08.2001 FR 0111105**

(43) Date de publication de la demande:
**02.01.2004 Bulletin 2004/01**

(73) Titulaire: **Thales**
**75008 Paris (FR)**

(72) Inventeurs:
• **RAILLON, Louis,**
**Thales Intellectual Property**
**F-94117 Arcueil cedex (AU)**

• **FYOT, Jean-Jacques,**
**Thales Intellectual Property**
**F-94117 Arcueil cedex (FR)**
• **QUER, Régis,**
**Thales Intellectual Property**
**F-94117 Arcueil cedex (FR)**
• **DEBAILLON-VESQUE, Christine,**
**Thales Intell. Prop.**
**F-94117 Arcueil cedex (FR)**

(74) Mandataire: **Lucas, Laurent Jacques**
**Marks & Clerk France**
**31-33 Avenue Aristide Briand**
**94117 Arcueil Cedex (FR)**

(56) Documents cités:
DE-C- 19 743 096        FR-A- 2 651 950
US-A- 5 856 954

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention se rapporte aux systèmes de détection sous-marine qui utilisent au moins une antenne linéaire de réception remorquée par un bâtiment de surface ou par un sous-marin. Plus particulièrement, elle conceme les systèmes d'activation des antennes linéaires remorquées à partir d'un bâtiment de surface et enroulables sur treuils.

Dans les systèmes connus, le bâtiment de surface remorque un poisson qui comporte l'émetteur acoustique composé de plusieurs transducteurs basse fréquence et auquel est accrochée l'antenne linéaire de réception. On trouvera par exemple la description d'un tel système dans le brevet français n° 95 07228 déposé le 16 juin 1995 par la société Thomson-CSF, publié le 31 octobre 1996 sous le n° 2 735 645 et délivré le 30 juillet 1997. Ces systèmes demandent des moyens importants en ce qui conceme la mise à l'eau et la récupération à bord du bateau. En moyens matériels, le bateau doit disposer d'au moins une grue associée à un treuil, et en moyens humains, l'expérience montre qu'il faut au moins 3 personnes pour effectuer les manoeuvres dans des conditions de sécurité qui restent cependant médiocres, voire mauvaises par mer forte.

Pour fixer les idées, un poisson tel que celui décrit dans le brevet précité pèse dans l'air autour de 2 tonnes. Ainsi, notamment lors de la récupération, il faut remonter le poisson après avoir enroulé le câble lourd sur un treuil avec l'antenne linéaire accrochée derrière, puis déconnecter l'antenne et l'enrouler sur un deuxième treuil.

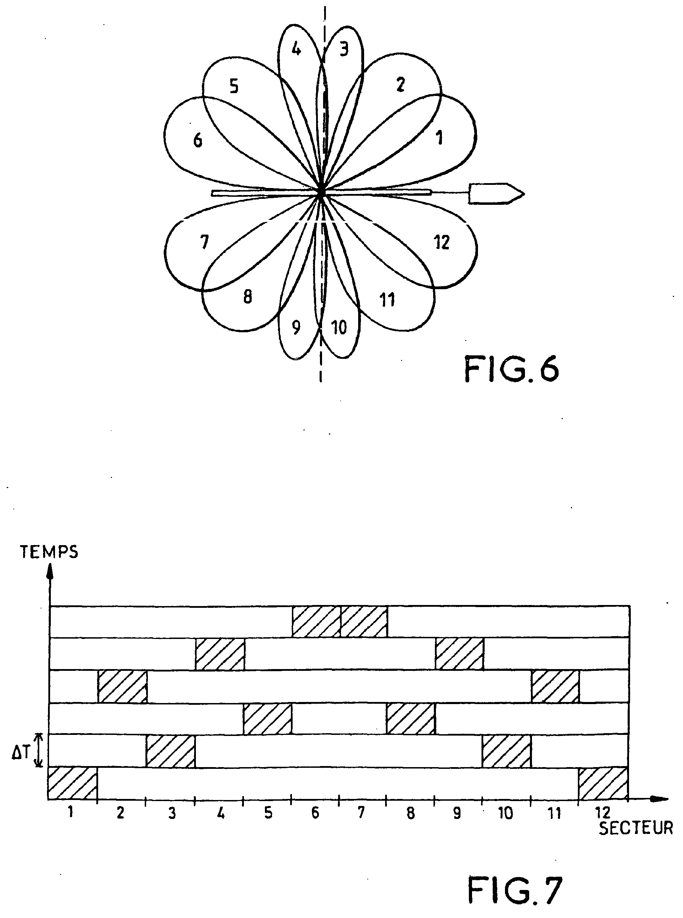

Selon l'art antérieur, par exemple décrit dans le brevet français n° 94 15109 déposé le 15 décembre 1994 par la Délégation Générale à l'Armement et publié le 21 juin 1996 sous le n° 2 728 425, l'émetteur acoustique est formé d'une antenne linéaire comportant des transducteurs électroacoustiques de type Tonpilz à 2 pavillons. Selon une réalisation décrite page 19 et figure 6, l'antenne d'émission est suivie d'une ou plusieurs antennes linéaires de réception, l'une au moins étant à levée d'ambiguïté. Si ce système résout le problème de la manutention évoqué précédemment et permet d'obtenir un système de lutte anti-sous-marine plus léger que les systèmes connus, il présente l'inconvénient d'être directif en émission, ce qui est bien conforme au but de l'invention décrite dans ce brevet, qui est de passer d'un système d'émission volumique connu à un système linéaire très directif dans un plan horizontal. De ce fait, l'utilisation de transducteurs de type Tonpilz dont les faces émissives sont situées dans l'axe de l'antenne ne permet pas la formation de voies dans des directions inclinées par rapport à cet axe. Ceci provient des interactions acoustiques entre les transducteurs qui s'insonifient mutuellement. De plus le diamètre de l'antenne est grand, de l'ordre de 20 cm, ce qui pose d'énormes problèmes pour l'enrouler sur un treuil.

Dans ces conditions, l'intérêt opérationnel de ce dispositif est très réduit.

Le brevet allemand DE 197 43 096 C1 décrit un système de détection sous-marine basse-fréquence remorqué comprenant en série sur une même ligne de remorquage une antenne linéaire d'émission suivi d'une antenne linéaire de réception, l'antenne d'émission comportant un ensemble de transducteurs flextenseurs de type cylindrique monocoque et des moyens pour alimenter ces transducteurs, les deux antennes ayant un diamètre sensiblement égale.

L'invention propose un système de détection sous-marine selon la revendication 1. Notamment,

l'invention propose d'utiliser une antenne linéaire d'émission comportant une pluralité d'ensemble d'émission chaque ensemble comportant un transducteur flextenseur (20) de type cylindrique monocoque associé à un conteneur cylindrique (21) permettant d'ajuster la flottabilité. Cette antenne est associée à un système de formation de voies à l'émission l'ensemble permettant d'obtenir une émission couvrant tout l'espace.

Selon une autre caractéristique de l'invention, ! a formation des voies à l'émission est effectuée selon 3 modes d'émission distincts : un mode directif, un mode sectoriel, et un mode d'émission sur 360° de type "Rotary Directional Transmitter" (RDT).

Selon une autre caractéristique de l'invention, le mode d'émission sur 360° de type "Rotary Directional Transmitter est du type à double faisceaux.

Selon une autre caractéristique de l'invention, on associe à l'antenne d'émission une antenne de réception comportant des triplets d'hydrophones intégrés de manière rigide dans une seule antenne linéaire.

Enfin, selon une autre caractéristique de l'invention, les diamètres des antennes d'émission et de réception sont égaux.

D'autres particularités et avantages apparaîtront clairement dans la description suivante, faite à titre d'exemple non limitatif en regard des figures annexées qui représentent :

- la figure 1, une vue schématique de l'ensemble du système ;
- la figure 2, une vue en perspective de deux ensembles d'émission ;
- la figure 3, une vue en coupe d'un transducteur 20 de la figure 2;
- la figure 4, un graphique des modes d'émission directif et sectoriel
- la figure 5, une loi de correction de phase des signaux d'émission ;
- la figure 6, un graphique du mode d'émission RDT ;
- la figure 7, un diagramme des temps d'émission dans ce mode RDT;
- la figure 8, une vue en perspective d'un ensemble de modules de réception assemblés ; et
- la figure 9, une vue éclatée en perspective d'un de ces modules.

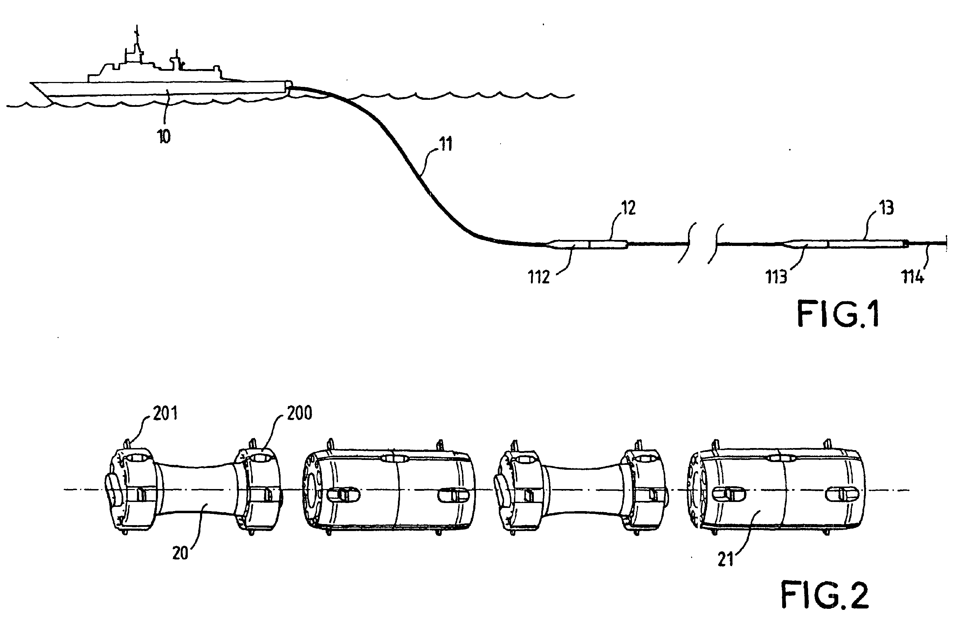

Sur la figure 1 qui représente un schéma d'ensemble du système, un bâtiment de surface 10 remorque par l'intermédiaire d'un câble lourd 11 une antenne d'émission 12 et une antenne de réception 13. De manière connue, des modules amortisseurs 112 et 113 viennent réduire les vibrations engendrées par le remorquage ainsi que par un câble de queue 114.

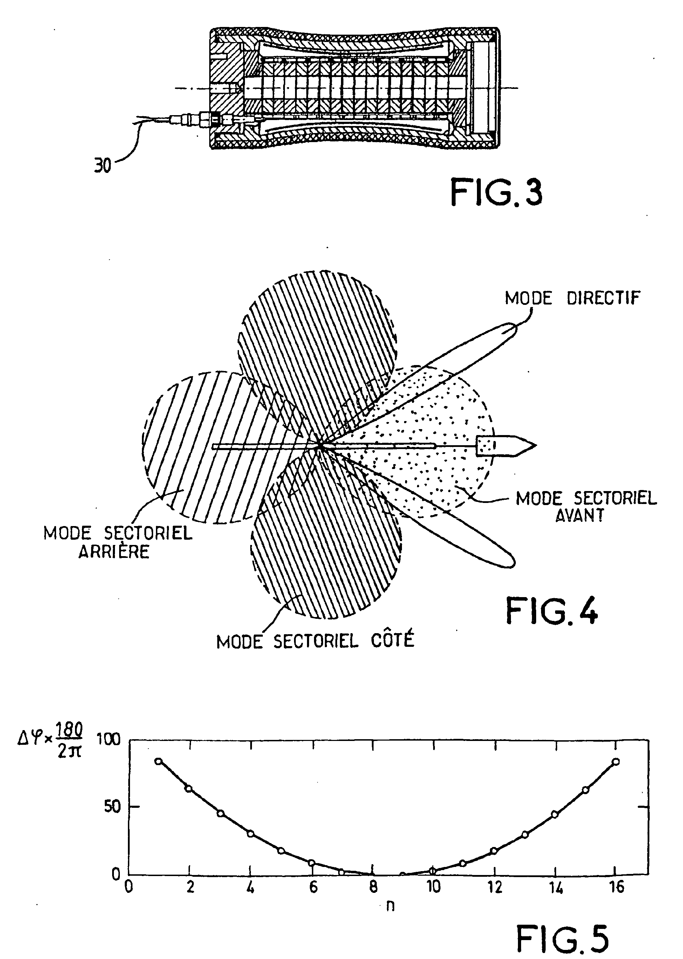

Sur la figure 2 on a représenté un exemple de réalisation de deux ensembles d'émission qui constitueront une antenne d'émission après leur mise en gaine. Chaque ensemble est formé d'un transducteur flextenseur 20 et d'un conteneur cylindrique 21 permettant d'ajuster la flottabilité de l'ensemble. Le transducteur est du type flextenseur monocoque fendue tel que décrit par exemple dans le brevet français n° 95 10534 déposé le 8 septembre 1995 par la Demanderesse, publié le 20 janvier 1997 sous le n° 2 738 704 et délivré le 7 octobre 1997. Des anneaux 200 munis de trois ergots 201 à 120° permettent le maintien et le centrage des transducteurs dans la gaine. En tête de l'antenne, un module non représenté contient les transformateurs électriques permettant d'élever la tension et de les accorder à la fréquence d'émission. Ils sont reliés aux 2 fils de commande 30 des moteurs piézoélectriques des transducteurs représentés suivant une coupe longitudinale sur la figure 3.

Chaque transducteur étant essentiellement capacitif de valeur C, l'accord est réalisé à partir de l'inductance L du transformateur en appliquant la formule

$$\omega = \frac{1}{\sqrt{LC}}$$ , ω étant la pulsation correspondant à la fréquence d'émission.

Ce module recoit les signaux du bâtiment de surface par l'intermédiaire du câble électro-porteur 11.

Selon l'invention, on forme des voies à l'émission dans tout l'espace en utilisant de manière connue des signaux obtenus d'un ensemble de traitement numérique situé à bord du bateau. On utilise pour cela 3 modes d'émission :

- un mode connu sous le nom anglo-saxon de RDT pour "Rotary Directional Transmitter", sur 360°,
- un mode sectoriel,
- un mode directionnel.

A chaque mode d'émission est associée une formation de voie numérique par retard désignée en anglo-saxon sous le terme de "Inverse Beam Forming".

De manière classique, les émissions sont formées d'impulsions CW, ou FM hyperbolique, ou une combinaison des deux, ou encore BPSK (Binary Phase Shifting Key) sur des durées variables. Pour former une voie, les signaux générés à partir de synthétiseurs de fréquence et numérisés sont retardés avec une valeur déterminée de retard pour chaque transducteur flextenseur, puis amplifiés pour être envoyés vers l'antenne d'émission.

La figure 4 représente schématiquement les diagrammes de rayonnement obtenus en mode directif et en mode sectoriel. En mode directif, le faisceau est le plus étroit possible compte tenu de la résolution de l'antenne et à chaque impulsion émise correspond une direction différente.

On rappelle que pour une antenne linéaire, le diagramme de rayonnement présente un volume à symétrie de révolution autour de l'axe de l'antenne sauf pour les 2 directions droite-gauche dans l'axe de l'antenne, en anglo-saxon "end-fire". On rappelle aussi que les largeurs de lobes sont variables, de la plus étroite sur le côté perpendiculairement à l'axe de l'antenne, en anglo-saxon "broad-side", à la plus large en "end-fire".

Les formations de voies sont obtenues classiquement par des retards ou des déphasages introduits sur le signal de chaque transducteur flextenseur, ce signal étant fourni par des synthétiseurs de fréquence suivant le type d'impulsion émise. Les retards sont élaborés numériquement à partir de cartes électroniques du commerce.

De manière connue, le mode sectoriel est obtenu par élargissement du lobe principal du faisceau d'émission en programmant une loi de retard ou de phase adaptée sur les signaux des transducteurs, par exemple une loi de type quadratique.

Suivant un exemple de réalisation, l'antenne d'émission comporte 16 transducteurs et la loi de correction de phase $\Delta\varphi\,x\,\dfrac{180}{2\pi}$ appliquée est représentée sur la figure 5, permettant d'obtenir des lobes de directivité à flancs raides pour mieux les séparer.

Suivant une caractéristique de l'invention, on applique un mode RDT à l'antenne d'émission pour obtenir une émission omnidirectionnelle à partir d'une impulsion longue. La figure 6 représente le diagramme de rayonnement obtenu selon des secteurs numérotés de 1 à 12. L'impulsion émise est divisée en 6 tranches juxtaposées de durée ΔT. Comme représenté sur la figure 7, chaque tranche d'impulsion fournit une émission suivant 2 secteurs. Chaque tranche ΔT peut correspondre à une impulsion codée en bande large ou en CW, ou les deux.

Suivant l'invention, l'antenne de réception comporte un dispositif à triplets d'hydrophones intégré de manière rigide dans une seule antenne linéaire. On effectue alors une formation de voie droite/gauche comme décrit par exemple dans le brevet français n° 89 11749 déposé le 8 septembre 1989 par la société Thomson-CSF, publié le 15 mars 1991 sous le n° 2 651 950 et délivré le 17 avril 1992. Ainsi la levée d'ambiguïté est alors faite avec une seule impulsion émise. Suivant un exemple de réalisation, la discrimination droite/gauche est obtenue dans les secteurs en gisement 30°-150° et 210°-330°.

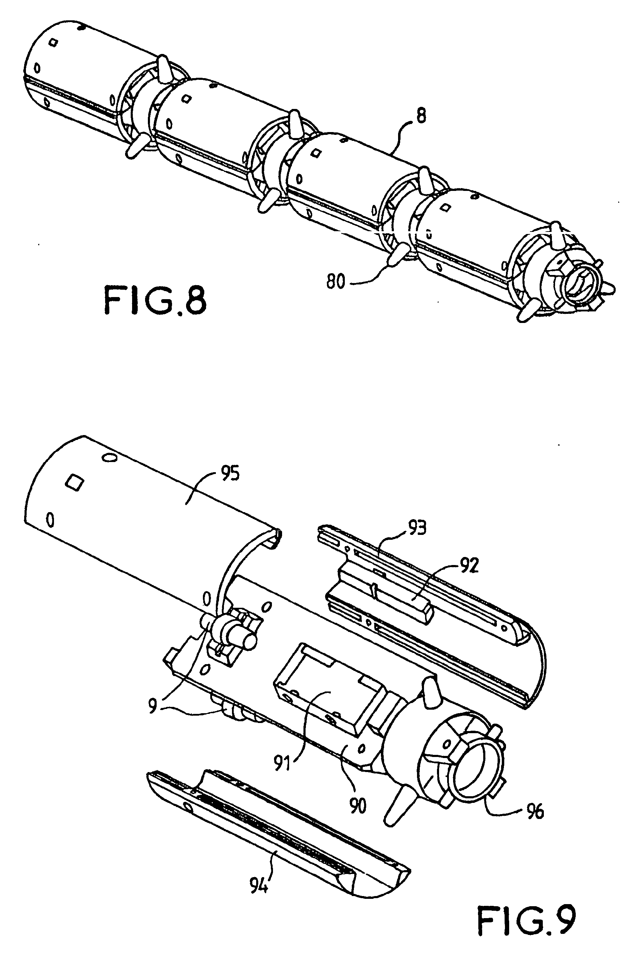

Les figures 8 et 9 représentent respectivement un ensemble de modules de l'antenne de réception avant la mise en gaine, et un tel module de réception en vue éclatée.

Chaque module contient 3 hydrophones 9 insensibles à l'accélération et positionnés aux sommets d'un triangle équilatéral dans un plan perpendiculaire à l'axe de l'antenne (le troisième est caché sur la figure). Ces hydrophones sont supportés par une plaque 90 dans laquelle est pratiqué un logement 91 pour installer un petit conteneur cylindrique contenant l'électronique de réception. La plaque est maintenue en place au moyen d'épaulements 92 pratiqués sur deux parties 93 et 94 formant le module avec une troisième partie 95. Une pièce annulaire 96 munie d'ergots assure le maintien sans torsion des modules entre eux. L'ensemble est maintenu dans la gaine par les pièces de centrage 80. On obtient ainsi une antenne de réception à levée d'ambiguïté compacte et permettant d'obtenir une directivité dans le plan vertical.

Selon un exemple de réalisation, les antennes d'émission et de réception ont un diamètre égal à environ 85 mm, la bande de fréquence étant située autour de 1,5 Hertz, et l'antenne de réception est composée de 128 modules, soit 3 x 128 canaux de réception, et on obtient une directivité dans le plan vertical comprise entre 110° et 120°.

## Revendications

1.  Système de détection sous-marine basse fréquence remorqué comprenant en série sur une même ligne de remorquage une antenne linéaire d'émission (12) suivie d'une antenne linéaire de réception (13) à levée d'ambiguïté, dans lequel l'antenne d'émission comporte:

    - une pluralité d'ensembles d'émission chaque ensemble comportant un transducteur flextenseur (20) de type cylindrique monocoque associé à un conteneur cylindrique (21) permettant d'ajuster la flottabilité de l'ensemble,
    - des moyens pour alimenter ces transducteurs,

    de manière à former des voies à l'émission couvrant tout l'espace, les 2 antennes ayant un diamètre sensiblement égal.

2.  Système selon la revendication 1, dont l'antenne linéaire de réception est formée de modules de réception (8), **caractérisé en ce que** chacun de ces modules comporte 3 hydrophones (9) dans un plan perpendiculaire à l'axe de l'antenne.

3.  Système selon l'une quelconque des revendications 1 et 2, dans lequel la formation des voies à l'émission est effectuée selon 3 modes d'émission distincts : un mode directif, un mode sectoriel, et un mode d'émission sur 360° de type "Rotary Directional Transmitter."

4.  Système selon la revendication 3, **caractérisé en ce que** le mode d'émission sur 360° de type "Rotary Directional Transmitter est du type à double faisceaux.

## Claims

1.  Towed low-frequency underwater detection system comprising in series on one and the same towline a linear transmission antenna (12) followed by a linear reception antenna (13) with ambiguity removal, in which the transmission antenna comprises:

    a plurality of transmission sets each set comprising a flextensional transducer (20) of monocoque cylindrical type associated with a cylindrical container (21) making it possible to adjust the buoyancy of the set,
    - means for powering these transducers,
    in such a way as to form channels on transmission covering all of space, the 2 antennas having a substantially equal diameter.

2.  System according to Claim 1, of which the linear reception antenna is formed of reception modules (8), **characterized in that** each of these modules comprises 3 hydrophones (9) in a plane perpendicular to the axis of the antenna.

3.  System according to either of Claims 1 or 2, in which the formation of the channels on transmission is done according to 3 distinct modes of transmission:

    a directional mode; a sectional mode, and a "Rotary Directional Transmitter" type 360° transmission mode.

4.  System according to Claim 3, **characterized in that** the "Rotary Directional Transmitter" type 360° transmission mode is of the double-beam type.

## Patentansprüche

1.  Geschlepptes Niederfrequenz-Unterwasserdetektionssystem, das in Reihe auf der gleichen Schleppleitung eine lineare Sendeantenne (12), gefolgt von einer linearen Empfangsantenne (13) mit Aufhebung der Mehrdeutigkeit aufweist, bei dem die Sendeantenne:

    - mehrere Sendeeinheiten, wobei jede Einheit einen Flextensor-Transduktor (20) vom zylindrischen selbsttragenden Typ aufweist, der einem zylindrischen Container (21) zugeordnet ist, der es ermöglicht, die Schwimmfähigkeit der Einheit zu regeln, und

- Mittel zum Speisen dieser Transduktoren umfasst, um in Senderichtung Kanäle zu formen, die den ganzen Raum abdecken, wobei die beiden Antennen im Wesentlichen den gleichen Durchmesser haben.

2. System nach Anspruch 1, dessen lineare Empfangsantenne von Empfangsmodulen (8) gebildet wird, **dadurch gekennzeichnet, dass** jeder dieser Module drei Hydrofone (9) in einer Ebene lotrecht zur Antennenachse aufweist.

3. System nach einem der Ansprüche 1 und 2, bei dem die Kanalbildung in Senderichtung gemäß drei unterschiedlichen Sendemodi erfolgt: einem Richtmodus, einem Sektormodus und einem 360°-Sendemodus vom Typ "Rotary Directional Transmitter".

4. System nach Anspruch 3, **dadurch gekennzeichnet, dass** der 360°-Sendemodus der Art "Rotary Directional Transmitter" vom Typ mit Doppelstrahl ist.

FIG.1

FIG.2

EP 1 373 933 B1

FIG.3

MODE DIRECTIF

MODE SECTORIEL
AVANT

MODE SECTORIEL
ARRIÈRE

MODE SECTORIEL CÔTÉ

FIG.4

$\Delta \varphi \times \frac{180}{2\pi}$

FIG.5

FIG.6

FIG.7

FIG.8

FIG.9